# EUROPÄISCHE PATENTSCHRIFT

(11) **EP 4 069 988 B1**
(45) Veröffentlichungstag und Bekanntmachung des Hinweises auf die Patenterteilung: **24.04.2024**
(21) Anmeldenummer: 20816142.2
(22) Anmeldetag: 26.11.2020
(51) Int. Cl.: F16C 19/38, F16C 33/64, B21H 1/12

(54) **VERFAHREN ZUR ERHÖHUNG DER TRAGFÄHIGKEIT UND WALZVORRICHTUNG ZUM HARTWALZEN EINER RANDSCHICHTGEHÄRTETEN WÄLZLAGERLAUFBAHN**
METHOD TO INCREASE THE LOAD CAPACITY AND ROLLING APPARATUS TO HARDEN AN EDGE HARDENED ROLLING BEARING RACE
PROCÉDÉ POUR AUGMENTER LA CAPACITE DE CHARGE ET APPAREIL DE LAMINAGE POUR DURCIR LE BORD D'UNE PISTE DE ROULEMENT

(30) Priorität: 03.12.2019 DE 102019218794
(43) Veröffentlichungstag der Anmeldung: 12.10.2022
(73) Patentinhaber: thyssenkrupp rothe erde Germany GmbH, 44137 Dortmund (DE); thyssenkrupp AG, 45143 Essen (DE)
(72) Erfinder: ROLLMANN, Jörg, 59558 Lippstadt (DE); HANDRECK, Thomas, 59609 Anröchte (DE); LÜNEBURG, Bernd, 45481 Mülheim (DE); TÖFKE, Matthias, 59555 Lippstadt (DE); LIEWEN, Christian, 59558 Lippstadt (DE)
(74) Vertreter: thyssenkrupp Intellectual Property GmbH
(86) Internationale Anmeldenummer: PCT/EP2020/083446
(87) Internationale Veröffentlichungsnummer: WO 2021/110519

(56) Entgegenhaltungen:
- EP-A1- 2 759 729
- US-A- 3 791 706

## Beschreibung

### Stand der Technik

Die Erfindung betrifft ein Verfahren zur Erhöhung der Tragfähigkeit einer randschichtgehärteten Wälzlagerlaufbahn nach dem Oberbegriff des Anspruchs 1 und eine Walzvorrichtung zum Hartwalzen einer randschichtgehärteten Wälzlagerlaufbahn nach Anspruch 13.

Aus DE 10 2016 114 895 A1 ist ein Verfahren zur Erhöhung der Tragfähigkeit einer randschichtgehärteten Wälzlagerlaufbahn bekannt. Dabei wird durch Walzen des gehärteten Randbereichs der Verlauf der Eigenspannung verändert und insbesondere das unterhalb der gehärteten Randschicht befindliche Zugeigenspannungsmaximum abgebaut. Beim Walzen wird eine Flächenpressung mit einem Druck zwischen 3.500 und 5.500 MPa realisiert. Die verwendete Walze umfasst vorzugsweise einen Wälzkörper, so dass der Wälzlagerring unmittelbar mit der korrekten Laufbahnbreite gewalzt wird. Nachteilig ist, dass durch das Verfahren zwar die statische Tragfähigkeit der Wälzlagerlaufbahn erhöht werden kann, die dynamische Dauerbelastbarkeit des Lagers jedoch abnimmt, wodurch die durchschnittliche Lebensdauer der Laufbahnen und damit des Lagers herabgesetzt ist.

Aus DE 10 2015 201 644 A1 und EP 2 771 585 B1 sind andere Walzverfahren zur Behandlung gehärteter Oberflächen bekannt. Ziel dieser Verfahren ist es, durch Festwalzen eine Ausbildung von Druckeigenspannungen direkt unter der Oberfläche von Metallen zu erreichen, das Material also kalt zu verfestigen und Druckeigenspannungen aufzubauen. Typischerweise können so in gehärteten Stählen Druckeigenspannungen in signifikanter Größe unmittelbar an der Oberfläche bis zu einem Tiefenbereich von mehreren 100 µm erzeugt werden. Zum Walzen werden zylindrische Rollkörper mit einem Durchmesser von 1 bis 9 mm verwendet. Nachteilig ist, dass bei diesen Verfahren nur auf die Eigenschaften einer gehärteten Randschicht selbst eingewirkt werden kann, ohne die statische Tragfähigkeit zu erhöhen, die bei randschichtgehärteten Wälzlagerlaufbahnen durch den Eigenspannungsverlauf unterhalb der gehärteten Randschicht begrenzt ist. EP 2 759 729 A1 offenbart ein verbessertes Verfahren zur Erhöhung der Tragfähigkeit einer randschichtgehärteten Wälzlagerlaufbahn eines Wälzlagerringelements und US 3 791 706 A offenbart eine Walzvorrichtung zum Hartwalzen einer randschichtgehärteten Wälzlagerlaufbahn eines Wälzlagerringelements.

### Offenbarung der Erfindung

Aufgabe der Erfindung ist es daher ein Verfahren und eine Walzvorrichtung zur Erhöhung der statischen Tragfähigkeit einer randschichtgehärteten Wälzlagerlaufbahn anzugeben, bei denen auch die Lebensdauer der Laufbahn verbessert ist.

Diese Aufgabe wird gelöst durch ein Verfahren zur Erhöhung der Tragfähigkeit einer randschichtgehärteten Wälzlagerlaufbahn mit den Merkmalen des Anspruchs 1 und einer Walzvorrichtung mit den Merkmalen des Anspruchs 13.

Hierdurch wird ein Verfahren zur Erhöhung der Tragfähigkeit einer randschichtgehärteten Wälzlagerlaufbahn eines Wälzlagerringelements angegeben, dass die folgenden Schritte umfasst:
- Bereitstellen eines Wälzlagerringelements, das einen ungehärteten Kernbereich und zumindest abschnittsweise eine mit einer Randhärtetiefe gehärtete Randschicht aufweist, wobei im Bereich der gehärteten Randschicht eine Wälzlagerlaufbahn ausgebildet ist,
- Hartwalzen der Wälzlagerlaufbahn mit mindestens einer Walze, wobei
- der Durchmesser der Walze im Bereich des 8 bis 25-fachen der Randhärtetiefe gewählt wird,
- eine in dem Wälzkontakt zwischen der Walze und der Wälzlagerlaufbahn während des Hartwalzens herrschende Flächenpressung im Bereich zwischen 2000 MPa und 3300 MPa eingestellt wird und
- die Wälzlagerlaufbahn nach dem Hartwalzen spanend bearbeitet wird.

Erfindungsgemäß werden somit während des Hartwalzens niedrigere Flächenpressungen eingesetzt als im Stand der Technik. Dem liegt die Erkenntnis zugrunde, dass die von den bekannten Flächenpressungen im Bereich von 3.500 bis 5.500 MPa hervorgerufenen Plastifizierungen im Kernbereich des Wälzlagerringelements zwar besonders effektiv zu einer Reduzierung des Zugeigenspannungsmaximums beitragen, und zwar derart, dass höhere Flächenpressungen zu einer stärkeren Erhöhung der statischen Tragfähigkeit führen. Durch die in das Material eingebrachten Mikrostrukturänderungen führen derartige Plastifizierungen aber zugleich zu einem Aufzehren des dynamischen Verformungsvermögens des Materials im Kernbereich. Bei einer dauerhaften dynamischen Belastung des Lagers kommt es daher früher zu Mikrorissen im Kernbereich des Wälzlagerrings, die sich zu größeren Ermüdungsbrüchen ausweiten können und so die Lebensdauer der Laufbahn beeinträchtigen. Bei den erfindungsgemäß verwendeten Flächenpressungen im Bereich zwischen 2000 MPa und 3300 MPa (Hertzsche Pressung) in Kombination mit im Vergleich zu der Randhärtetiefe großen Walzendurchmessern wird eine Tiefenwirkung beim Hartwalzen erreicht, bei der die der Summe aus Lastspannungen und Eigenspannungen entsprechende Vergleichsspannung zwar die Streckgrenze des Wälzlagerringelements im Kernbereich überschreitet, aber gleichzeitig die dadurch hervorgerufenen plastischen Verformungen im Kernbereich minimiert sind. Ein besonders guter Kompromiss zwischen schonender Materialbearbeitung und zugleich effektivem Abbau der Eigenspannungen wird für Flächenpressungen im Bereich von 2300 MPa bis 2800 MPa erreicht.

Ferner wurde gefunden, dass der Schritt des Hartwalzens Oberflächenstrukturveränderungen in der Wälzlagerlaufbahn hervorruft, die zu Spannungsspitzen beim Überrollen durch Wälzkörper führen und so Laufbahn und Wälzkörper schädigen können. Erfindungsgemäß ist daher vorgesehen, nachfolgend zum Schritt des Hartwalzens Oberflächenstrukturveränderungen durch eine spanende Bearbeitung abzutragen, um die Lebensdauer der Laufbahn weiter zu erhöhen.

Bei einer bevorzugten Ausführungsform wird die Flächenpressung im Wälzkontakt derart gewählt, dass in dem ungehärteten Kernbereich hervorgerufene Lastspannungen höchstens das 0,9 bis 2-fache, vorzugsweise das 1,2 bis 1,5-fache, der Streckgrenze des ungehärteten Kernbereichs betragen. Der ungehärtete Kernbereich beginnt bei einem Oberflächenabstand des circa 1,1-fachen der Randhärtetiefe. Unter Lastspannung ist im Sinne der Erfindung die Vergleichsspannung zu verstehen, die dem realen, mehrachsigen durch das Hartwalzen in das Wälzlagerelement eingebrachten Spannungszustand entspricht und einen Vergleich mit dem (eindimensionalen) Materialkennwert Streckgrenze ermöglicht. Die Lastspannung wird vorzugsweise unter Verwendung der Gestaltänderungsenergiehypothese berechnet. Um das Zugeigenspannungsmaximum im Kernbereich wirksam zu reduzieren, ist es erforderlich, dass die Vergleichspannung der Summe aus Lastspannungen und Eigenspannungen die Streckgrenze des Kernmaterials überschreitet, so dass durch Umlagerungen die Eigenspannungen abgebaut werden können. Wenn die Lastspannungen im ungehärteten Kernbereich das 0,9 bis 2-fache der Streckgrenze des Materials des Wälzlagerringelements nicht übersteigen, werden die plastischen Verformungen des Kernmaterials soweit wie möglich minimiert. Insbesondere wird eine Mikro-Rissbildung, wie sie durch lokales Überschreiten der Zugfestigkeit des Materials eintreten könnte, vermieden. Durch die schonende Bearbeitung der Wälzlagerlaufbahn bleibt zudem das plastische Verformungsvermögen der Wälzlagerlaufbahn weitgehend erhalten.

Besonders bevorzugt wird die Flächenpressung im Wälzkontakt derart gewählt, dass durch das Hartwalzen in dem Kernbereich höchstens plastische Dehnungen von bis zu 5% auftreten. Durch die Reduzierung der Plastifizierung auf 5% Dehnung wird ein Fließen des Kernmaterials über weitere Strecken vermieden. Dadurch bleibt die ursprüngliche Mikrostruktur des Materials erhalten und die Eigenspannungen werden durch lokale Dehnungen/Stauchungen des Kernmaterials abgebaut.

Die Wälzlagerringelemente sind bevorzugt aus einem Wälzlagerstahl, wie beispielsweise 42CrMo4 ausgebildet.

Bevorzugt wird bei dem Hartwalzen die Wälzlagerlaufbahn zwischen 1 und 100 Mal, besonders bevorzugt zwischen 2 bis 10 Mal überwalzt. Der größte Effekt beim Abbau des Zugeigenspannungsmaximums tritt bereits bei der ersten Überrollung auf. Gerade beim Einsatz der im Vergleich zum Stand der Technik niedrigeren Flächenpressungen hat sich aber herausgestellt, dass auch darauffolgende Überrollungen einen signifikanten Effekt zum Abbau des Zugeigenspannungsmaximums beitragen können. Mehr als 10 Überrollungen weisen zwar auch noch einen messbaren Effekt auf, sind aber unter Wirtschaftlichkeitsgesichtspunkten oft nicht mehr lohnend.

Um die von einer zum Hartwalzen verwendeten Walzvorrichtung aufzunehmenden Kräfte bei den vorgegebenen Flächenpressungen zu reduzieren, ist es vorteilhaft, wenn der Wälzkontakt eine Breite von höchstens 2/3 der Breite der Wälzlagerlaufbahn aufweist und die Wälzlagerlaufbahn in mehreren einander überlappenden Bahnen hartgewalzt wird.

In einer bevorzugten Ausführungsform weist die Walze eine Mantelfläche auf, die zumindest in Randbereichen des Wälzkontakts im Längsschnitt konvex gekrümmt ausgebildet ist. Durch die Krümmung der Walze in den Randbereichen, werden Spannungsüberhöhungen an den Rändern des Wälzkontakts in der Wälzlagerlaufbahn reduziert. Dadurch wird die Oberfläche der Wälzlagerlaufbahn geschont und die auftretenden Oberflächenstrukturveränderungen reduziert. In der Folge ist der Aufwand für die spanende Nachbearbeitung reduziert. Besonders bevorzugt ist die konvex gekrümmte Ausbildung bei Walzen, die schmaler sind als die Wälzlagerlaufbahn, damit Verschleiß in der Wälzlagerlaufbahn vermieden wird.

Die Wälzlagerringelemente sind vorzugsweise zumindest im Bereich der Wälzlagerlaufbahnen mit Aufmaß gefertigt. Das Aufmaß entspricht dabei vorzugsweise den maximal zu erwartenden Oberflächenstrukturveränderungen. Auf diese Weise kann der Aufwand für die spanende Nachbearbeitung reduziert werden.

In einer bevorzugten Ausführungsform werden als Wälzlagerringelemente die Wälzlagerringe eines Rollenlagers bereitgestellt, das Rollenlager wird für das Hartwalzen unter Einbringen von mindestens einer Rollenreihe zwischen die Wälzlagerringe zusammengesetzt, wobei die Rollenreihe zumindest eine Übermaßrolle mit einem radialen Übermaß als Walze umfassen, und die Flächenpressung wird durch eine axial wirkende Belastung in das Rollenlager eingebracht. Vorteilhaft hieran ist, dass für das Hartwalzen keine gesonderte Walzvorrichtung erforderlich ist. Das Hartwalzen wird durch Verdrehen der Wälzlagerringe eines belasteten, mit mindestens einer Übermaßrolle versehenen Lagers ausgeführt. Dazu kann beispielsweise ein unterer Wälzlagerring fixiert werden und ein oberer Wälzlagerring, beispielsweise mittels eines Hydraulikzylinders oder eines Gewichtes, entsprechend belastet und gegenüber dem unteren Wälzlagerring verdreht werden. Nach einem einfachen oder mehrfachen Umlauf des oberen Wälzlagerrings sind die Wälzlagerlaufbahnen hartgewalzt.

Wenn das Rollenlager mindestens zwei Rollenreihen enthält und zumindest einer der Wälzlagerringe für ein formschlüssiges Einschließen der Rollenreihen zwischen den Wälzlagerringen zumindest zwei axial gegeneinander verspannbare Teilringe aufweist, kann die axial wirkende Belastung auch durch axiales Verspannen der Teilringe gegeneinander aufgebracht werden. Dadurch ist auch keine Einrichtung zur äußeren Krafteinwirkung auf das Lager mehr erforderlich. Die Teilringe können beispielsweise durch Verschrauben gegeneinander axial verspannt werden.

In einer bevorzugten Ausführungsform des erfindungsgemäßen Verfahrens, werden mindestens drei Übermaßrollen über den Umfang einer Wälzlagerlaufbahn verteilt als Walzen in das Rollenlager eingesetzt. Dadurch kann die Lastübertragung zwischen den Wälzlagerringen vergleichmäßigt werden und die Verformung der Ringe während des Hartwalzens reduziert werden. Besonders bevorzugt weisen dabei die Übermaßrollen das radiale Übermaß auf unterschiedlichen, einander überlappenden Teilbereichen der Laufbahnbreite auf.

Zur Verbesserung der Maßhaltigkeit der Wälzlagerringe während des Hartwalzens ist es ferner bevorzugt, dass die mindestens eine Rollenreihe mit Rollen vollbesetzt wird.

Das erfindungsgemäße Verfahren wird vorzugsweise bei der Herstellung von Großwälzlagern eingesetzt, die einen Durchmesser von über 1000 mm aufweisen. Insbesondere eignet sich das Verfahren für die Herstellung von Rotorlagern für Windkraftanlagen. Die Erfindung betrifft daher auch ein Rotorlager für eine Windkraftanlage umfassend mindestens eine Reihe von Kegel- oder Zylinderrollen, wobei die Wälzlagerlaufbahnen des Rotorlagers unter Ausführung des zuvor beschriebenen Verfahrens hergestellt sind.

Vorrichtungsmäßig wird die Aufgabe gelöst durch eine Walzvorrichtung zum Hartwalzen einer randschichtgehärteten Wälzlagerlaufbahn eines Wälzlagerringelements umfassend eine Stützvorrichtung mit mindestens einer Stützwalze zur Lagerung des Wälzlagerringelements und ein mittels mindestens zweier an der Stützvorrichtung angelenkter Zugstangen gehaltenes Joch. Dabei bildet das Joch mit den Zugstangen und der Stützvorrichtung einen geschlossenen Rahmen, durch den das Wälzlagerringelement während des Hartwalzens hindurchführbar ist. Die Walzvorrichtung umfasst ferner ein an dem Joch hydraulisch abgestütztes, in Längsrichtung des Jochs mittels einer Positioniereinrichtung verschiebbar gelagertes Walzgerüst, in dem mindestens eine zur Bearbeitung der Wälzlagerlaufbahn vorgesehene Walze gelagert ist.

Durch den geschlossenen Rahmen lässt sich in einfacher und kontrollierter Weise eine Flächenpressung der Walze gegenüber einer Wälzlagerlaufbahn des Wälzlagerelements aufbauen. Die Walze ist dabei über die Verschiebung des Walzgerüsts gegenüber der Wälzlagerlaufbahn positionierbar. Für eine weitere Positionierung können eine oder mehrere der Zugstangen längenverstellbar ausgebildet sein. Insbesondere bei Einsatz von Walzen mit einer geringeren Breite als die Wälzlagerlaufbahn, kann vorgesehen sein, das Walzgerüst während des Hartwalzens vorzugsweise jedoch lastfrei bei einem Bahnwechsel längs des Jochs zu verschieben. Dadurch kann sukzessive die gesamte Wälzlagerlaufbahn in einander überlappenden Bahnen hartgewalzt werden. Bevorzugt ist das Walzgerüst in Längsrichtung des Jochs mittels eines Gewindetriebs verschiebbar.

Zum Hartwalzen von Wälzlagerlaufbahnen von geschlossenen Wälzlagerringen als Wälzlagerringelemente ist es vorteilhaft, wenn der geschlossene Rahmen zur Auf- und Entnahme des Wälzlagerringelements öffenbar ausgebildet ist.

In einer bevorzugten Ausführungsform der Walzvorrichtung ist das Walzgerüst an dem Joch über mindestens einen mit Druck beaufschlagbaren Hydraulikzylinder abgestützt.

Weiterhin bevorzugt ist die Walze als eine Primärwalze ausgebildet, die über in dem Walzgerüst in Lastrichtung verschiebbar angeordnete Führungslager gelagert ist, und mindestens eine Sekundärwalze mit einem im Vergleich zu der Primärwalze größeren Durchmesser in dem Walzgerüst gelagert ist, an der die Primärwalze zur Lastableitung umfangsseitig abgestützt ist. Durch die Lagerung der Primärwalze mittels verschiebbaren Führungslagern wird die kleinere Primärwalze in Position gehalten, ohne dass ihre Lagerung für die Aufnahme der gesamten Walzlast ausgelegt sein muss. Die Lastableitung der Walzlast erfolgt über die größer dimensionierten Lager der mindestens einen Sekundärwalze.

Weitere vorteilhafte Ausführungsformen sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

### Kurzbeschreibung der Zeichnungen

- Fig. 1: zeigt schematisch den Verlauf von in einem randschichtgehärteten Wälzlagerringelement durch Walzen unterschiedlichen Durchmessers hervorgerufenen Lastspannungen (ohne Eigenspannungen) im Verhältnis zu Zugfestigkeit, Streckgrenze und Eigenspannungsverlauf im Wälzlagerringelement,
- Fig. 2: zeigt schematisch den Verlauf von in einem randschichtgehärteten Wälzlagerringelement durch Walzen mit unterschiedlichen Flächenpressungen hervorgerufenen Lastspannungen im Verhältnis zu Zugfestigkeit, Streckgrenze und Eigenspannungsverlauf im Wälzlagerringelement,
- Fig. 3: zeigt schematisch die beim Hartwalzen durch Last- und Eigenspannung hervorgerufene Gesamtvergleichsspannung im Wälzlagerringelement, sowie den Eigenspannungsverlauf vor und nach dem Hartwalzen,
- Fig. 4a-c: zeigen schematisch den Ablauf des erfindungsgemäßen Verfahrens in Querschnittsdarstellungen des Wälzlagerringelements,
- Fig. 5a: zeigt schematisch den Schritt des Hartwalzens von Wälzlagerlaufbahnen in einem Doppelkegelrollenlager mit Übermaßrollen,
- Fig. 5b: zeigt des Ausschnitt X von Fig. 5a in einer Detaildarstellung,
- Fig. 6: zeigt schematisch einen Satz von Übermaßrollen, die zum Hartwalzen von Wälzlagerlaufbahnen auf einander überlappenden Bahnen in ein Wälzlager einsetzbar sind,
- Fig. 7: zeigt schematisch ein Ausführungsbeispiel der erfindungsgemäßen Walzvorrichtung bei der Bearbeitung einer äußeren Laufbahn eines Wälzlagerringelements,
- Fig. 8: zeigt schematisch die Walzvorrichtung gemäß Fig. 7 bei der Bearbeitung einer inneren Laufbahn eines Wälzlagerringelements mit geöffnetem Rahmen,
- Fig. 9a: zeigt schematisch eine Darstellung der Walzvorrichtung nach Fig. 8 im Querschnitt, und
- Fig. 9b: zeigt schematisch eine Detaildarstellung des Walzgerüstes der Walzvorrichtung nach Fig. 8 im Querschnitt.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

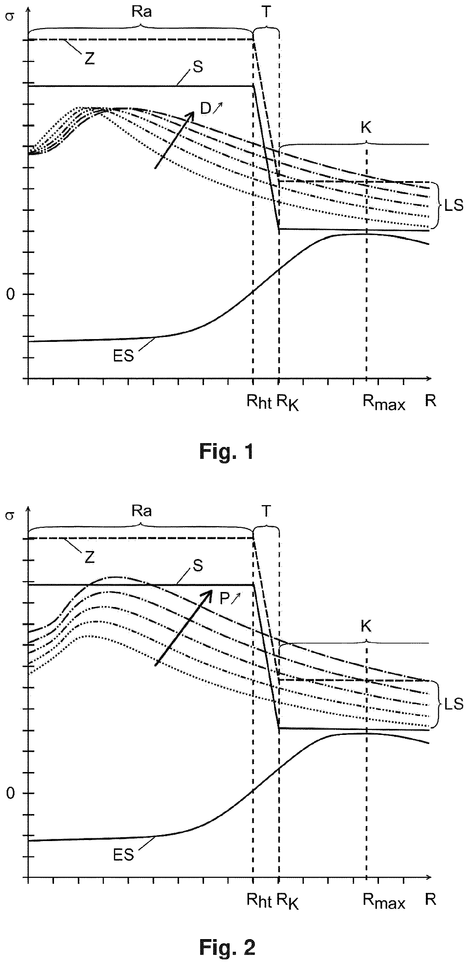

In **Fig. 1** sind Materialkennwerte eines randschichtgehärteten Wälzlagerringelements und der von Walzen bzw. Wälzkörpern unterschiedlichen Durchmessers D hervorgerufene Lastspannungsverlauf gezeigt.

Auf der Abszisse ist der Abstand R zur Oberfläche des Wälzlagerringelements aufgetragen und auf der Ordinate die Spannung σ (Vergleichsspannung, Eigenspannung, zul. Spannungen wie Zugfestigkeit und Streckgrenze). Das Material des Wälzlagerrings, vorzugsweise Stahl, weist drei sich qualitativ unterscheidende Bereiche auf: Eine gehärtete Randschicht Ra, die sich von der Oberfläche aus bis zu einer Randhärtetiefe Rht erstreckt und sich durch eine erhöhte Zugfestigkeit Z und Streckgrenze S auszeichnet, einen ungehärteten Kernbereich K mit im Vergleich zur Randschicht Ra geringerer Zugfestigkeit Z und Streckgrenze S beginnend bei einem Oberflächenabstand RK und einem zwischen diesen Bereichen liegenden Übergangsbereich T, in dem Zugfestigkeit Z und Streckgrenze S auf die Werte des Kernbereichs K abfallen. Der Übergangsbereich T hat üblicherweise eine Tiefe von ca. 0,1 Ra, so dass üblicherweise gilt RK = ca.1,1 Rht.

Durch das Randschichthärten des Wälzlagerringelements sind Eigenspannungen ES in das Material eingebracht worden, deren qualitativer Verlauf ebenfalls in Fig. 1 dargestellt ist. In der gehärteten Randschicht Ra herrschen Druckeigenspannungen (σ < 0) vor. Durch die Druckeigenspannungen in der Randschicht Ra ist die Festigkeit des Wälzlagerringelements an der Laufbahnoberfläche erhöht. In dem Übergangsbereich T gehen die Druckeigenspannungen in Zugeigenspannungen (σ > 0) über, die im Kernbereich K bei einem Oberflächenabstand Rmax ihr Maximum erreichen.

Bei Wälzlagerlaufbahnen randschichtgehärteter Wälzlagerringe treten dann bleibende Formänderungen auf, wenn die in das Material eingebrachten Gesamtvergleichsspannungen von durch Walzen oder Wälzkörper eingebrachten Lastspannungen und im Material vorhandenen Eigenspannungen die Streckgrenze S des Materials überschreiten. Während die Streckgrenze S in der gehärteten Randschicht Ra erhöht ist und die Druckeigenspannungen ES in der Randschicht Ra den Lastspannungen LS entgegenwirken, addieren sich im Kernbereich K bei geringerer Streckgrenze S die vorhandenen Zugeigenspannungen ES und Lastspannungen LS zu einer größeren Gesamtvergleichsspannung.

In Fig. 1 sind verschiedene Lastspannungskurven LS für verschiedene Durchmesser D von Walzen bzw. Wälzkörpern dargestellt. Die einfach strichpunktierte Linie entspricht dabei dem größten Durchmesser, die durchgängig gepunktete Linie dem kleinsten. Wie Fig. 1 zu entnehmen ist, weist die Lastspannungskurve ein Maximum im Bereich der gehärteten Randschicht Ra auf und fällt dann zum Kernbereich K hin ab. Die maximale Lastspannung bleibt für unterschiedliche Durchmesser D im Wesentlichen gleich, aber das Maximum verschiebt sich zu größeren Oberflächenabständen R. Dadurch nehmen die im Kernbereich K hervorgerufenen Lastspannungen zu. Bei gleichbleibender Randhärtetiefe Ra und gleichbleibenden Flächenpressungen P im Wälzkontakt kann eine Zunahme des Wälzkörperdurchmessers D daher im ungehärteten Kernbereich K zu einem Überschreiten der Streckgrenze S führen.

Bei vielen technischen Anwendungsgebieten von Großwälzlagern können im Zuge des technischen Fortschritts durch Skalierung der Anlagen Effizienzsteigerungen realisiert werden. Aus diesem Grunde werden beispielsweise auch für die Lagerung von Hauptrotoren von Windenergieanlagen Wälzlager mit randschichtgehärteter Laufbahn in immer größeren Abmessungen nachgefragt. Hierbei steigen auch die Durchmesser der in den Lagern eingesetzten Wälzkörper (im Wesentlichen Kegel- und Zylinderrollen). Durch den Einsatz größerer Wälzkörper können bei gleichbleibenden Flächenpressungen im Wälzkontakt höhere Kräfte über das Lager abgestützt werden.

Die Auslegung der Wälzlager erfordert die Berücksichtigung von dauerhaften Betriebslasten und Extremlasten. Diese dürfen nicht zu einem Lagerschaden führen. Die dauerhaft zulässigen Betriebslasten sind begrenzt durch die in der Tiefe RK = ca. 1,1 Rht auftretenden Lastspannungen im Verhältnis zur Streckgrenze S.

Die zulässigen Extremlasten bestimmen sich dagegen u. a. aus der durch die Extremlast hervorgerufenen dauerhaften Verformung der Laufbahnoberfläche. Bei Schwenklagern erfolgt die Auslegung in der Praxis üblicherweise mit dem Verfahren nach Zwirlein (Zwirlein et al. (1983), Case Depth for Induction Hardened Slewing Bearing Rings, SAE Technical Paper Series 831371). Um die dort angegebene statische Tragfähigkeit zu erreichen muss ein Überschreiten der Streckgrenze S im Kernbereich K vermieden werden. Dazu ist es üblich, mit zunehmendem Durchmesser D des Wälzkörpers die Randhärtetiefe Ra zu erhöhen, wodurch der Kernbereich K niedrigeren Lastspannungen ausgesetzt ist. Dabei hat sich in der Praxis eine 10% Regel für das Verhältnis von Randhärtetiefe Ra zu Wälzkörperdurchmesser D etabliert.

Abweichend davon ist die statische Tragfähigkeit von Hauptrotorlagern für Windenergieanlagen anhand der Norm ISO 76 zu bewerten. Diese Norm enthält eine verschärfte Anforderung an die zulässige plastische Verformung der Wälzkörperlaufbahnen im Verhältnis zum Wälzkörperdurchmesser, durch die sich beim Übergang von Schwenklagern auf Rotorlager die statische Tragfähigkeit reduziert.

Diese verschärfte Anforderung bringt die bekannte Verfahrensweise der Erhöhung der Randhärtetiefe Rht an ihre Grenzen. Die durch Induktionshärten erreichbare Randhärtetiefe Rht ist durch den zu härtenden Werkstoff, dessen Wärmebehandlungszustand und die verwendete Anlagentechnik /Verfahren begrenzt. Bereits die "10% Regel" bei induktiv ganzflächengehärteten Laufbahnen ist für große Wälzkörperdurchmesser D von 65-120mm anlagen- und verfahrensbedingt begrenzt.

Alternativ ist eine Anhebung der Kernfestigkeit durch eine andere Wahl der als Grundmaterial verwendeten Stahlsorte denkbar. Aufgrund des hierfür erhöhten Bedarfs an Legierungselementen und den erhöhten Zerspanungskosten hätte dies aber ebenfalls erhebliche Kostensteigerungen zur Folge.

Zur Erhöhung der statischen Tragfähigkeit von randschichtgehärteten Wälzlagerlaufbahnen verfolgt das erfindungsgemäße Verfahren daher einen anderen Ansatz. Die Randschichthärtung der Wälzlagerringelemente erfolgt üblicherweise induktiv. Eine Anwendung des erfindungsgemäßen Verfahrens auf anderweitig randschichtgehärtete, beispielsweise einsatzgehärtete Wälzlagerringelemente ist aber ebenfalls von der Erfindung umfasst. Wie mit Bezug zu Fig. 1 bereits ausgeführt, werden die die statische Tragfähigkeit begrenzenden zulässigen Verformungen der Wälzlagerlaufbahn durch die im Kernbereich K vorliegenden Zugeigenspannungen begünstigt, da sie die Gesamtvergleichsspannung LES aus Last- und Eigenspannungen im Kernbereich K erhöhen. Das erfindungsgemäße Verfahren zielt daher auf eine Reduzierung der Zugeigenspannungen im Kernbereich K ab, wodurch die gleichen Lastspannungen LS zu geringeren Verformungen der Wälzlagerlaufbahn 2 führen. Die Reduzierung des Zugeigenspannungsmaximums und der damit verbundene Härtungseffekt der Wälzlagerlaufbahn gegenüber statischen Belastungen kann durch einen Walzvorgang erzielt werden, der demzufolge als Hartwalzen bezeichnet werden kann.

Für die Reduzierung des Zugeigenspannungsmaximums sind die in den Kernbereich K eingebrachten Lastspannungen LS maßgeblich. Diese Lastspannungen LS können im Wesentlichen durch die Parameter Walzendurchmesser D (vgl. Fig. 1) und Flächenpressung P (vgl. **Fig. 2**) eingestellt werden. In Fig. 2 sind die aus verschiedenen Flächenpressungen bei gleichem Walzendurchmesser resultierenden Lastspannungen dargestellt. Die einfach strichpunktierte Linie entspricht dabei der höchsten Flächenpressung.

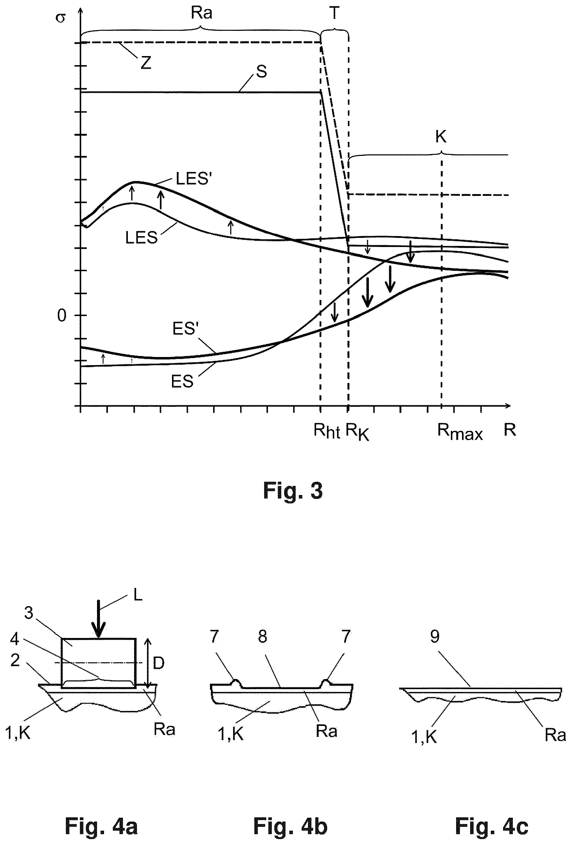

**Fig. 3** zeigt den Abbau des Zugeigenspannungsmaximums durch das erfindungsgemäße Verfahren und die daraus resultierende größere statische Tragfähigkeit der Wälzlagerlaufbahn. Die Kurve ES zeigt den Verlauf der Eigenspannungen vor dem Hartwalzen, die Kurve ES` die Eigenspannungen nach dem Hartwalzen. Während sich die Druckeigenspannungen in der gehärteten Randschicht Ra leicht reduzieren, nehmen die Zugeigenspannungen im Kernbereich K stark ab. Die kombinierte Gesamtvergleichsspannung LES aus Last- und Eigenspannungen überschreitet beim Vorgang des Hartwalzens die Streckgrenze S im Kernbereich K und führt dadurch zum Abbau der Zugeigenspannungen durch Umlagerungen. Eine erneute Belastung der Wälzlagerlaufbahn durch die gleiche Lastspannung nach dem Hartwalzen resultiert in einer geringeren kombinierten Gesamtvergleichsspannung LES` im Kernbereich K, die in ihrem gesamten Verlauf unter der Streckgrenze S verbleibt. Die statische Tragfähigkeit der Wälzlagerlaufbahn wird somit durch den Vorgang des Hartwalzens erhöht.

In Fig. **4a bis 4c** ist die Durchführung des erfindungsgemäßen Verfahrens zur Erhöhung der Tragfähigkeit einer randschichtgehärteten Wälzlagerlaufbahn 2 eines Wälzlagerringelements 1 schematisch dargestellt. In Fig. 4a wird zunächst ein Wälzlagerringelement 1, das einen ungehärteten Kernbereich K und zumindest abschnittsweise eine mit einer Randhärtetiefe gehärtete Randschicht Ra aufweist, bereitgestellt, wobei im Bereich der gehärteten Randschicht Ra eine Wälzlagerlaufbahn 2 ausgebildet ist. Anschließend wird die Wälzlagerlaufbahn 2 mit einer Walze 3, deren Durchmesser D im Bereich des 8 bis 25-fachen der Randhärtetiefe liegt, hartgewalzt. In dem Wälzkontakt 4 zwischen der Walze 3 und der Wälzlagerlaufbahn 2 wird eine während des Hartwalzens herrschende Flächenpressung im Bereich zwischen 2000 MPa und 3300 MPa eingestellt. Dazu wird die Walze 3 vorzugsweise in einer zur Wälzlagerlaufbahn im Wesentlichen senkrechten Lastrichtung L belastet.

Durch den beim Hartwalzen auf die Laufbahn mit einer Walze ausreichend großen Durchmessers ausgeübte Flächenpressung, beginnt die plastische Verformung im Grundwerkstoff unmittelbar an der Grenze zu der gehärteten Randschicht, wo der Werkstoff zusätzlich zu den Lastspannungen durch die ursprünglich wirksamen Eigenspannungen oberhalb der Streckgrenze S beansprucht wird. Nach der Entlastung der Laufbahnoberfläche bleibt in der gewalzten Wälzlagerlaufbahn 8 eine messbare Gestaltabweichung (Delle/Laufspur) zurück (vgl. Fig. 4b).

Bei dem Hartwalzen mit den angegebenen Parametern entstehen Oberflächenstrukturveränderungen 7, die wenige Vielfache eines Zehntausendstel des Wälzkörperdurchmessers D betragen. Diese werden durch eine spanende Bearbeitung der Wälzlagerlaufbahn 2 nach dem Hartwalzen abgetragen, so dass eine ebene, spanend bearbeitete Wälzlagerlaufbahn 9 entsteht (vgl. Fig. 4c). Die so behandelte Laufbahn kann erneute Beanspruchungen gleicher Art und Größenordnung mit sehr viel geringerer Gestaltabweichung ertragen und weist somit eine erhöhte statische Tragfähigkeit auf. Die spanende Bearbeitung kann mit bestimmter oder unbestimmter Schneide erfolgen.

Um den gewünschten Effekt der Reduzierung der Zugeigenspannungen im Kernbereich zu erzielen, ohne die dynamische Dauerbelastbarkeit der Wälzlagerlaufbahn negativ zu beeinflussen, ist für die erfindungsgemäße Lehre die beanspruchte Kombination aus Flächenpressungen P und Walzendurchmesser D wesentlich.

Durch die Wahl des Walzendurchmessers D im Bereich des 8 bis 25-fachen der Randhärtetiefe Rht wird die Wirkung der Lastspannungen LS in der benötigten Materialtiefe sichergestellt. Anders als bei anderen bekannten Verfahren zum Festwalzen gehärteter Lagerringe wird durch das erfindungsgemäße Hartwalzen kein weiterer Aufbau von Druckeigenspannungen oder eine großvolumige Werkstoffverfestigung (Versetzungsbildung) angestrebt. Im Gegenteil werden durch das erfindungsgemäße Verfahren hohe Eigenspannungsspitzen, wie sie z.B. an Einschlüssen auftreten, abgebaut, so dass sich in diesen Bereichen beim Betrieb des Lagers geringere Spannungsschwankungen und damit höhere dynamische Tragfähigkeiten/Lebensdauern ergeben. Vorzugsweise kann ein thermisches Entspannen, bei beispielsweise 160-180°C, vor oder nach dem Festwalzen durchgeführt werden, um die Maßstabilität und Tragfähigkeit weiter zu erhöhen. Vorzugsweise hat die verwendete Walzrolle etwa den gleichen Durchmesser D wie der später im Lager eingesetzte Wälzkörper.

Beim Hartwalzen mit den nach Anspruch 1 vorgesehenen Parameterbereichen für Walzendurchmesser D und Flächenpressung P kann zugleich erreicht werden, dass
- das Material unterhalb der gehärteten Randschicht Ra im Kernbereich K plastifiziert und die Zugeigenspannungen in diesem Bereich abgebaut werden,
- das Material in der gehärteten Randschicht Ra (oberhalb der Randhärtetiefe Rht) im Bereich ohne geometrische Störungen (z.B. Einschlüsse) im Wesentlichen elastisch beansprucht wird und allenfalls eine geringe Plastifizierung erfährt, so dass im Gegensatz zu bekannten Festwalzverfahren Druckeigenspannungen aus der Wärmebehandlung des Härtens und Abschreckens unverändert bleiben bzw. abgebaut werden, und
- das Material in der gehärteten Randschicht Ra (oberhalb der Randhärtetiefe Rht) im Bereich mit geometrischen Störungen (z.B. Einschlüsse) im plastischen Bereich beansprucht wird.

Die durch das erfindungsgemäße Verfahren erzeugten Eigenspannungsumlagerungen - großvolumig im Kernbereich K als auch lokal begrenzt an Ungänzen und Einschlüssen in der gehärteten Randschicht - führen zu einer erhöhten statischen und dynamischen Tragfähigkeit sowie Maßstabilität der behandelten Lager.

Gemäß einer vorteilhaften Weiterbildung der Erfindung sollten die beim Hartwalzen verwendeten Flächenpressungen die im Betrieb des Lagers zu erwartende statische Maximalbelastung im Kernbereich K nicht überschreiten. Eine größere Flächenpressung führt zwar grundsätzlich zu einem schnelleren und effektiveren Abbau des Zugeigenspannungsmaximums, bedingt jedoch gleichzeitig eine Aufzehrung des Verformungsvermögens und damit der erwartbaren Lebensdauer des Wälzlagerrings unter Dauerbelastung.

Aufgrund dieser Überlegung wird die Flächenpressung im Wälzkontakt 4 vorzugsweise derart gewählt, dass in dem ungehärteten Kernbereich K hervorgerufene Lastspannungen LS höchstens das 0,9 bis 2-fache, vorzugsweise das 1,2 bis 1,5-fache, der Streckgrenze S des ungehärteten Kernbereichs K betragen. Wie bereits vorstehend erwähnt ist die dynamische Dauerbelastbarkeit eines Wälzlagers beispielsweise durch eine Vergleichsspannung des ca. 0,6-fachen der Streckgrenze S am Beginn RK = ca. 1,1 Rht des Kernbereichs K (also zum Beispiel nach Zwirlein et al. (1983), SAE Technical Paper Series 831371) gegeben. Bei der Auslegung von Wälzlagern übliche Faktoren zwischen dynamischer Dauerbelastbarkeit und statischer Extrembelastung liegen im Bereich von 1,5 bis 3,3, insbesondere zwischen 2 und 2,5, woraus sich die angegebenen Bereiche für die Lastspannung LS beim Hartwalzen ergeben.

Darüber hinaus werden bei der Auswahl des Walzendurchmessers D und der Flächenpressung in Abhängigkeit der vorliegenden Randhärtetiefe Rht bzw. der Eigenspannungen ES sowie der zugehörigen Werkstoffparameter (Zugfestigkeit Z und Streckgrenze S des Randschichtmaterials, sowie des Kernmaterials) bevorzugt die folgenden Kriterien erfüllt:
Kriterien mit Bezug auf das Material im Kernbereich K:
   a) Vorzugsweise wird die Flächenpressung P im Wälzkontakt 4 derart gewählt, dass durch das Hartwalzen in dem Kernbereich K höchstens plastische Dehnungen von bis zu 5% auftreten. Die plastische Verformung im Kernbereich K aufgrund der Beanspruchung aus der Gesamtvergleichsspannung LES aus resultierenden Lastspannungen LS und wirksamen ursprünglichen Eigenspannungen ES kann unter Berücksichtigung von Streckgrenze S und/oder Zugfestigkeit Z beispielsweise in einer FEM-Simulation vorab bestimmt werden.
   b) Vorzugsweise liegen die Beanspruchungen aus der Gesamtvergleichsspannung LES aus Lastspannungen LS und wirksamen ursprünglichen Eigenspannungen ES im Kernbereich K zumindest abschnittsweise, insbesondere in dem Abschnitt vom Beginn des Kernbereichs RK (= ca. 1,1 × Rht) bis zum Oberflächenabstand maximaler Zugeigenspannungen Rmax, oberhalb der Streckgrenze S des Kernbereichs K.
Kriterien mit Bezug auf das Material in der gehärteten Randschicht Ra:
   c) Vorzugsweise wird die Flächenpressung P im Wälzkontakt 4 derart gewählt, dass durch das Hartwalzen in der Randschicht Ra höchstens plastische Dehnungen von bis zu 2% auftreten. Die plastische Verformung im Randbereich aufgrund der Beanspruchung aus der Gesamtvergleichsspannung LES aus resultierenden Lastspannungen LS und wirksamen ursprünglichen Eigenspannungen ES kann unter Berücksichtigung der vorgenannten Materialparameter in einer Computersimulation, beispielsweise in einer FEM-Simulation, vorab bestimmt werden.
   d) Vorzugsweise liegt die Beanspruchung aus der Gesamtvergleichsspannung LES aus Lastspannungen LS und wirksamen ursprünglichen Eigenspannungen ES an Einschlüssen und Ungänzen in der gehärteten Randschicht Ra oberhalb der Streckgrenze. Dies hat den Vorteil, dass auch in der gehärteten Randschicht vorab die maximale Wälzbeanspruchung auftritt. An den Rändern ggf. vorhandener Einschlüsse wird dadurch ein Abbau von Spannungsspitzen erreicht. Diese wirken im Betrieb einem Risswachstum an den Rändern der Einschlüsse entgegen.

Besonders bevorzugt werden die Parameter Flächenpressung P und Wälzkörperdurchmesser D auf Basis einer Computersimulation an die Materialeigenschaften des Wälzlagerringelements angepasst gewählt. Dadurch kann die Anzahl der erfüllbaren vorgenannten Kriterien optimiert werden.

Die Anzahl der Überrollungen beim Hartwalzen sollte erfindungsgemäß zwischen 1 und 100 liegen. Bevorzugt werden 2 bis 10 Überrollungen ausgeführt.

Prinzipiell ist es auch denkbar anstelle eines Hartwalzens unter Abrollen einer Walze auf der Laufbahnoberfläche das Hartwalzen unter Drücken der Walze in klein beabstandeten Schritten auf die Laufbahnoberfläche durchzuführen. Ein solches "Hartdrücken" soll als von dem Begriff des Hartwalzens umfasst verstanden werden.

Das Hartwalzen kann bei ausreichend vorhandener Walzkraft gleichzeitig über der gesamten Laufbahnbreite B erfolgen. Alternativ weist der Wälzkontakt 4 jedoch eine Breite b von z. B. höchstens 2/3 der Breite B der Wälzlagerlaufbahn 2 auf und die Wälzlagerlaufbahn 2 wird in mehreren einander überlappenden Bahnen hartgewalzt. In diesem Fall muss nur eine geringere Walzkraft bereitgestellt werden. Eine Mindestbreite b des Wälzkontakts 4 von 10% des Wälzkörperdurchmessers D ist vorteilhaft.

Um Spannungsspitzen an den Rändern des Wälzkontakts zu verringern weist die Walze 3 vorzugsweise eine Mantelfläche 5 auf, die zumindest in Randbereichen 6 des Wälzkontakts 4 im Längsschnitt konvex gekrümmt ausgebildet ist.

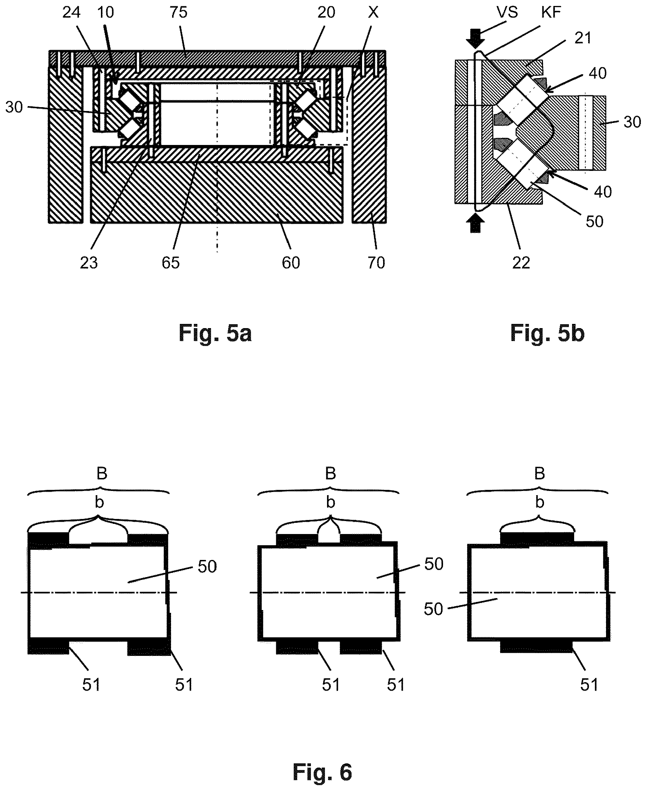

In **Fig. 5a** **und b** ist schematisch der Schritt des Hartwalzens von Wälzlagerlaufbahnen in einem Doppelkegelrollenlager mit Übermaßrollen gezeigt.

Dabei werden als Wälzlagerringelemente die Wälzlagerringe 20, 30 eines Rollenlagers 10 bereitgestellt, das Rollenlager 10 wird für das Hartwalzen unter Einbringen von zwei Rollenreihen 40 zwischen die Wälzlagerringe 20, 30 zusammengesetzt, wobei die Rollenreihen 40 zumindest eine Übermaßrolle 50 mit einem radialen Übermaß als Walze umfassen, und die Flächenpressung durch eine axial wirkende Belastung in das Rollenlager 10 eingebracht wird.

Das in Fig. 5a gezeigte Rollenlager 10 ist ein Doppelkegelrollenlager, das zwei Rollenreihen 40 enthält, wobei zumindest einer der Wälzlagerringe 20, 30 für ein formschlüssiges Einschließen der Rollenreihen 40 zwischen den Wälzlagerringen 20, 30 zwei axial gegeneinander verspannbare Teilringe 21, 22 aufweist, und die axial wirkende Belastung durch axiales Verspannen der Teilringe 21, 22 gegeneinander aufgebracht wird. Dazu sind die beiden Teilringe 21, 22 über gemeinsame Befestigungsschrauben 23 an einer Anschlusskonstruktion verschraubt. Die Anschlusskonstruktion wird hier beispielhaft aus einer auf einem Drehtisch 60 angeordneten ersten Platte 65 gebildet.

Die Höhe der Walzkraft ergibt sich dabei aus dem Übermaß der Übermaßrollen 50, der durch die Befestigungsschrauben 23 aufgebrachten Vorspannung VS und den elastischen Eigenschaften der Struktur. Die Vorspannung VS und das Übermaß der Walzrollen stellen die maßgebende, einstellbare Größe für die resultierende Walzkraft dar.

Der andere Wälzlagerring 30 ist an einer feststehenden Anschlusskonstruktion über Befestigungsschrauben 24 fixiert. Die feststehende Anschlusskonstruktion ist in Fig. 5a aus einem feststehenden Bock 70 und einer zweiten Platte 75 gebildet. Das Walzen kann durch einen Antrieb des Drehtisches 60 erfolgen. Durch das Fixieren des stehenden Ringes 30 gegenüber dem angetriebenen Drehtisch 60 wird einer der Wälzlagerringe 20, 30 in Drehbewegung versetzt, wobei die Laufbahnen 2 der Wälzlagerringe 20, 30 von den Übermaßrollen 50 überrollt werden. Über einen oder mehrere Umläufe wird somit ein Hartwalzen der gesamten Wälzlagerlaufbahn 2 bewirkt.

In Fig. 5b ist der Ausschnitt X der Fig. 5a gezeigt. Durch das Verschrauben wird eine Vorspannung VS in das Lager eingebracht, die an den Übermaßrollen die benötigte Walzkraft auf die Laufbahnoberfläche aufprägt. Der resultierende Kraftfluss KF ist in Fig. 5b beispielhaft eingezeichnet.

Die Wälzlagerringe 20, 30 sind vorzugsweise zumindest im Bereich der Wälzlagerlaufbahn mit Aufmaß gefertigt.

Das Rollenlager 10 wird vorzugsweise mit der vollen Anzahl an Rollen in den Rollenreihen 40 ausgestattet. Dies hat den Vorteil, dass das Rollenlager 10 auch beim Walzvorgang maßhaltig bleibt, d.h. eine Verschiebung der Wälzlagerringe 20, 30 zueinander begrenzt wird und die Formabweichung jedes Wälzlagerringes 20, 30 minimiert wird. Dadurch wird sichergestellt, dass die Wälzlagerlaufbahn gleichmäßig über Laufbahnumfang und -breite plastifiziert. Rollen in umfangsseitiger Nähe zu einer Übermaßrolle 50 werden durch das radiale Übermaß der Übermaßrolle 50 entlastet und tragen entsprechend weniger oder gar nicht zur Maßhaltigkeit bei und können auch weggelassen werden. Die Anzahl an Übermaßrollen 50 bestimmt das notwendige Antriebsmoment, welches zum Drehen des Drehtisches 60 und somit zum Hartwalzen notwendig ist.

Die Länge sämtlicher Rollen (also auch der Übermaßrollen 50) entspricht vorzugsweise der Laufbahnbreite B (bzw. der Breite des hartzuwalzenden Bereichs). Die Profilierung (Kontur) und das Übermaß der Walzrollen sind hierbei so zu wählen, dass beim Walzen in allen Laufbahnbereichen die gewünschten Flächenpressungen auftreten und hohe Kantenpressungen vermieden werden.

Es wird mindestens eine, vorzugsweise werden mindestens drei Übermaßrollen 50 über den Umfang einer Wälzlagerlaufbahn verteilt als Walzen in das Rollenlager 10 eingesetzt. Zur gleichmäßigen Verteilung der Walzkraft werden die Übermaßrollen vorzugsweise rotationssymmetrisch in der jeweiligen Laufbahn verteilt.

Die vorzugsweise mindestens drei Übermaßrollen 50 können gleich ausgebildet sein. Bevorzugt ist jedoch, wenn die Übermaßrollen 50 das radiale Übermaß 51 auf unterschiedlichen, einander überlappenden Teilbereichen 52, 53, 54 der Laufbahnbreite B aufweisen (vgl. **Fig. 6**). Dadurch können die benötigten Walzkräfte zur Erreichung der erforderlichen Flächenpressungen P und Tiefenbeanspruchungen reduziert werden. Alle Übermaßrollen 50 einer Rollenreihe 40 werden dabei so aufeinander abgestimmt, dass spurweise die gesamte Laufbahnbreite B jeder Rollenreihe 40 überrollt wird und es zwischen den Bereichen mit lokalem Übermaß eine Überdeckung gibt.

Beispielsweise können die Übermaßrollen ein Übermaß von ca. 1-2% des Wälzkörperdurchmessers aufweisen. Nach dem Hartwalzen ist das Rollenlager 10 zu demontieren und die Laufbahn spanend fertig zu bearbeiten.

Durch eine Computeranalyse der Kontaktpressung unter Berücksichtigung der Profilierung der Übermaßrollen (z.B. logarithmische Profilierung) werden hohe Kantenpressungen oder Unsymmetrien erkannt. Diese können beispielsweise durch Änderungen am Rollenprofil, den Steifigkeiten der Anschlusskonstruktion oder der Profilierung der Laufbahn reduziert oder auch vermieden werden.

Vorteilhaft für die Ausführung ist eine symmetrische Ausprägung der an das Lager angeschlossenen Steifigkeiten. Kann diese nicht eingehalten werden, besteht die Möglichkeit durch eine Wahl unterschiedlicher radialer Übermaße in den beiden Rollenreihen 40 des Rollenlagers 10 dennoch eine gleiche resultierende Pressung auf den Wälzkörperlaufbahnen zu erreichen.

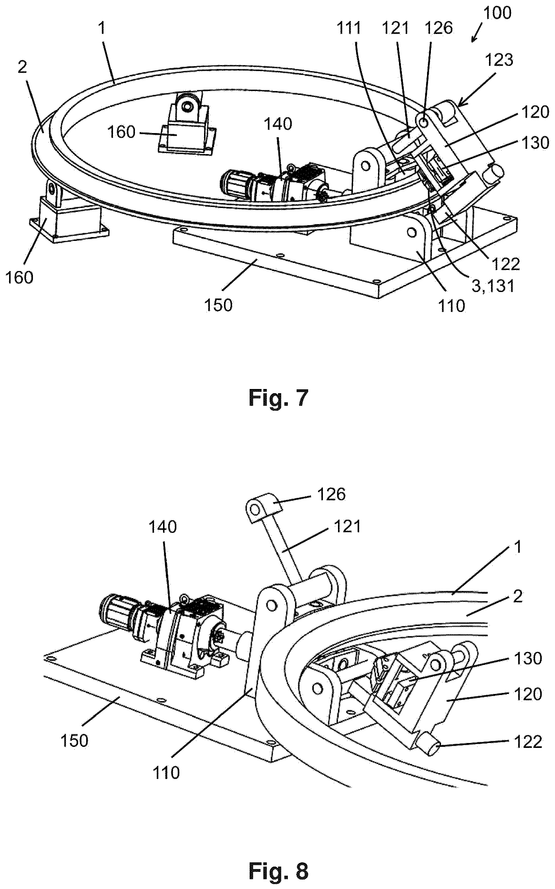

In den **Fig. 7 bis 9** ist ein Ausführungsbeispiel einer erfindungsgemäßen Walzvorrichtung 100 dargestellt.

Die Walzvorrichtung 100 zum Hartwalzen einer randschichtgehärteten Wälzlagerlaufbahn 2 eines Wälzlagerringelements 1 umfasst eine Stützvorrichtung 110 mit Stützwalzen 111, 112 zur Lagerung des Wälzlagerringelements 1, ein mittels mindestens zweier an der Stützvorrichtung 110 angelenkter Zugstangen 121, 122 gehaltenes Joch 120 und ein an dem Joch 120 hydraulisch abgestütztes, in Längsrichtung des Jochs 120 mittels einer Positioniereinrichtung 124 verschiebbar gelagertes Walzgerüst 130. Dabei bildet das Joch 120 mit den Zugstangen 121, 122 und der Stützvorrichtung 110 einen geschlossenen Rahmen 130, durch den das Wälzlagerringelement 1 während des Hartwalzens hindurchführbar ist. In dem Walzgerüst 130 ist mindestens eine zur Bearbeitung der Wälzlagerlaufbahn 2 vorgesehene Walze 3 gelagert.

Die Zugstangen sind gelenkig gelagert, um das Wälzlagerringelement 1 und die Walze 3 frei von Kräften parallel zur Laufbahnoberfläche zu halten. Die zwei Zugstangen 121, 122 tragen das Joch 120 mit der Positioniereinrichtung 124 (beispielsweise ein Gewindetrieb) für das Walzgerüst 130. Vorzugsweise weist die Positioniereinrichtung 124 zusätzlich eine Führung zur Lagerung des Walzgerüstes 130 auf.

Die Positioniereinrichtung 124 erlaubt das Positionieren des Walzgerüstes 130 über der Wälzlagerlaufbahn 2. In dem dargestellten Ausführungsbeispiel besteht die Positioniereinrichtung 124 aus einer Parallelführung, die mindestens die Laufbahnbreite B des Wälzlagerringelementes 1 überdeckt und einer angetriebenen Spindel oder Zahnstange mit der das Walzgerüst 130 in Querrichtung parallel zur Laufbahnoberfläche verschoben werden kann.

Das Walzgerüst 130 ist vorzugsweise an dem Joch 120 über mindestens einen mit Druck beaufschlagbaren Hydraulikzylinder 125 abgestützt, der dem Aufbringen der erforderlichen Walzkraft dient. Über den Hydraulikzylinder 125 kann das Walzgerüst 130 auch senkrecht zur zu bearbeitenden Wälzlagerlaufbahn 2 um wenige Millimeter verschiebbar sein. Der zwischen Joch 120 und Walzgerüst 130 angeordnete Hydraulikzylinder 125 verspannt im belasteten Zustand das Walzgerüst 130 zwischen Joch 120 und Wälzlagerlaufbahn 2.

Bevorzugt ist das Wälzlagerringelement 1 während des Hartwalzens zum einen in der Walzvorrichtung 100 und zum anderen über die Erstreckung des Wälzlagerringelements 1 verteilt auf Tragrollen aufweisenden Stützböcken 160 gelagert.

Vorzugsweise sind die Zugstangen 121, 122 in der Länge, beispielsweise über ein Gewinde, verstellbar. Dadurch kann ein Hartwalzen unterschiedlicher Ringquerschnitte mit unterschiedlichen Laufbahntragwinkeln vereinfacht werden.

Bevorzugt ist vorgesehen, dass der geschlossene Rahmen 130 zur Auf- und Entnahme des Wälzlagerringelements 1 öffenbar ausgebildet ist. Dazu kann beispielsweise eine Bolzenverbindung 126 an mindestens einer der beiden Zugstangen 121, 122 vorgesehen sein. Durch Abstecken mit einem Bolzen oder durch eine andere leicht lösbare Verbindung kann der geschlossene Rahmen 123 geöffnet und in eine Ladeposition geschwenkt werden. Dann kann das zu walzende Wälzlagerringelement 1 aufgelegt werden.

Wie in Fig. 7 dargestellt, umfasst die Walzvorrichtung 100 ferner bevorzugt einen Antrieb 140 zum Antreiben der Stützwalzen 111, 112. Dadurch wird der Kraftfluss der Walzkraft vorteilhaft genutzt, um eine Vortriebskraft auf das Wälzlagerringelement 1 auszuüben. Antrieb 140 und Walzvorrichtung 100 sind vorzugsweise auf einer gemeinsamen Grundplatte 150 angeordnet.

In Fig. 8 ist die Walzvorrichtung 100 aus Fig. 7 in der geöffneten Ladeposition gezeigt. In diesem Beispiel ist die Bolzenverbindung 126 zum Öffnen des geschlossenen Rahmens 123 zwischen Zugstange 121 und Joch 120 ausgebildet. Denkbar ist aber auch eine Bolzenverbindung an einer anderen Stelle des Rahmens 123, beispielsweise zwischen Stützvorrichtung 110 und Zugstange 121.

Fig. 8 zeigt ferner, dass die Walzvorrichtung 100 gemäß Fig. 7 sowohl zum Hartwalzen einer inneren, als auch einer äußeren Wälzkörperlaufbahn desselben Rollenlagers 10 geeignet ist.

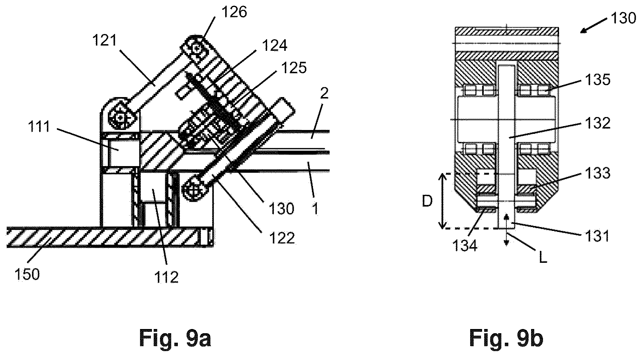

In Fig. 9a ist die Walzvorrichtung 100 gemäß Fig. 8 im Querschnitt gezeigt. Wie Fig. 9a zu entnehmen ist, ist für das Hartwalzen von Wälzlagerlaufbahnen 2, die zur Achse des Rollenlagers geneigt verlaufen, die Stützvorrichtung 110 vorzugsweise mit einer L-förmigen Auflagefläche ausgebildet, in der jeweils mindestens eine vorzugsweise zwei radiale Stützwalzen 111 und mindestens eine vorzugsweise zwei axiale Stützwalzen 112 angeordnet sind. Für das Hartwalzen von radialen oder axialen Wälzlagerlaufbahnen kann die Auflagefläche der Stützvorrichtung auch als plan mit seitlichen Führungen für das Wälzlagerringelement 1 ausgebildet sein.

In Fig. 9b ist ein Querschnitt durch das Walzgerüst 130 gezeigt. Das Walzgerüst 130 umfasst eine Primärwalze 131 und mindestens eine Sekundärwalze 132, um die Walzkräfte über Wälzlager 135 der Sekundärwalze 132 aufzubringen. Die Wälzlager 135 (beispielsweise doppelreihige Zylinderrollenlager) der Sekundärwalze 132 dienen der Übertragung der Walzkraft vom Walzgerüst 130 auf die Sekundärwalze 132. Die Primärwalze 131 ist über Führungslager 133, 134 in dem Walzgerüst 130 in Lastrichtung L verschiebbar gelagert. Die Führungslager 133, 134 können beispielsweise als Wälz- und/oder als Gleitlager ausgebildet sein und dienen der Führung der Primärwalze 131 hinsichtlich Verlagerungen in Lastrichtung L als auch während des Abrollens in Richtung der Wälzlagerlaufbahn 2.

Vorzugsweise sind Primärwalze 131 und Sekundärwalze 132 gehärtet. Die Primärwalze 131 weist einen Durchmesser im Bereich des 8 bis 25-fachen der Randhärtetiefe Rht auf. Die Sekundärwalze 132 weist vorzugsweise einen mindestens doppelt so großen Durchmesser auf wie die Primärwalze 131.

Beispielsweise wird mit der in Fig. 7 bis 9 dargestellten Walzvorrichtung 100 und einer Primärwalze 131 mit einem Durchmesser von 100 mm und einer Breite von 30 mm bei einer Walzkraft von ca. 255 kN eine Oberflächenpressung von 2530 MPa erreicht und die vorgenannten Kriterien a) bis d) erfüllt.

Mit Hilfe des zuvor beschriebenen Verfahrens und der mittels der Walzvorrichtung 100 können bevorzugt die Wälzlagerlaufbahnen von Rotorlagern für Windkraftanlagen umfassend mindestens eine Reihe von Kegel- oder Zylinderrollen bearbeitet werden.

### Bezugszeichenliste

- 1: Wälzlagerringelement
- 2: Wälzlagerlaufbahn
- 3: Walze
- 4: Wälzkontakt
- 5: Mantelfläche
- 6: Randbereich
- 7: Oberflächenstrukturveränderung
- 8: gewalzte Wälzlagerlaufbahn
- 9: gewalzte und spanend bearbeitete Wälzlagerlaufbahn
- 10: Rollenlager
- 20: Wälzlagerring
- 21, 22: Teilringe
- 23, 24: Befestigungsschrauben
- 30: Wälzlagerring
- 40: Rollenreihe
- 50: Übermaßrolle
- 51: radiales Übermaß
- 52, 53, 54: Teilbereiche
- 60: Drehtisch
- 65: erste Platte
- 70: Bock
- 75: zweite Platte

- 100: Walzvorrichtung
- 110: Stützvorrichtung
- 111, 112: Stützwalzen
- 120: Joch
- 121, 122: Zugstangen
- 123: geschlossener Rahmen
- 124: Gewindetrieb
- 125: Hydraulikzylinder
- 126: Bolzenverbindung
- 130: Walzgerüst
- 131: Primärwalze
- 132: Sekundärwalze
- 133, 134: Führungslager
- 135: Wälzlager
- 140: Antrieb
- 150: Grundplatte
- 160: Stützbock

- b: Breite Wälzkontakt
- B: Breite Wälzlagerlaufbahn
- D: Durchmesser
- ES: Eigenspannungen vor dem Hartwalzen
- ES`: Eigenspannungen nach dem Hartwalzen
- K: ungehärteter Kernbereich
- KF: Kraftfluss
- L: Lastrichtung
- LS: Lastspannungen
- LES: kombinierte Last- und Eigenspannungen
- P: Flächenpressung
- R: Tiefe / Oberflächenabstand
- Ra: Randschicht
- Rht: Randhärtetiefe
- RK: Tiefe des Beginns des Kernbereichs
- Rmax: Tiefe maximaler Eigenspannungen
- S: Streckgrenze
- T: Übergangsbereich
- Z: Zugfestigkeit
- σ: Vergleichsspannung

## Patentansprüche

1. Verfahren zur Erhöhung der Tragfähigkeit einer randschichtgehärteten Wälzlagerlaufbahn (2) eines Wälzlagerringelements (1), umfassend
- Bereitstellen eines Wälzlagerringelements (1), das einen ungehärteten Kernbereich (K) und zumindest abschnittsweise eine mit einer Randhärtetiefe (Rht) gehärtete Randschicht (Ra) aufweist, wobei im Bereich der gehärteten Randschicht (Ra) eine Wälzlagerlaufbahn (2) ausgebildet ist,
- Hartwalzen der Wälzlagerlaufbahn (2) mit mindestens einer Walze (3),
**dadurch gekennzeichnet, dass**
- der Durchmesser (D) der Walze (3) im Bereich des 8 bis 25-fachen der Randhärtetiefe (Rht) gewählt wird,
- eine in dem Wälzkontakt (4) zwischen der Walze (3) und der Wälzlagerlaufbahn (2) während des Hartwalzens herrschende Flächenpressung im Bereich zwischen 2000 MPa und 3300 MPa eingestellt wird und
- die Wälzlagerlaufbahn (2) nach dem Hartwalzen spanend bearbeitet wird.

2. Verfahren nach Anspruch 1, **dadurch gekennzeichnet, dass** die Flächenpressung im Wälzkontakt (4) derart gewählt wird, dass in dem ungehärteten Kernbereich (K) hervorgerufene Lastspannungen (LS) höchstens das 0,9 bis 2-fache, vorzugsweise das 1,2 bis 1,5-fache, der Streckgrenze (S) des ungehärteten Kernbereichs (K) betragen.

3. Verfahren nach Anspruch 1 oder 2, **dadurch gekennzeichnet, dass** die Flächenpressung im Wälzkontakt (4) derart gewählt wird, dass durch das Hartwalzen in dem Kernbereich (K) höchstens plastische Dehnungen von bis zu 5% auftreten.

4. Verfahren nach einem der Ansprüche 1 bis 3, **dadurch gekennzeichnet, dass** der Wälzkontakt (4) eine Breite (b) von höchstens 2/3 der Breite (B) der Wälzlagerlaufbahn (2) aufweist und die Wälzlagerlaufbahn (2) in mehreren einander überlappenden Bahnen hartgewalzt wird.

5. Verfahren nach einem der Ansprüche 1 bis 4, **dadurch gekennzeichnet, dass** die Walze (3) eine Mantelfläche (5) aufweist, die zumindest in Randbereichen (6) des Wälzkontakts (4) im Längsschnitt konvex gekrümmt ausgebildet ist.

6. Verfahren nach einem der Ansprüche 1 bis 5, **dadurch gekennzeichnet, dass** das Wälzlagerringelement (1) zumindest im Bereich der Wälzlagerlaufbahn (2) mit Aufmaß gefertigt ist.

7. Verfahren nach einem der Ansprüche 1 bis 6, **dadurch gekennzeichnet, dass** als Wälzlagerringelemente (1) die Wälzlagerringe (20, 30) eines Rollenlagers (10) bereitgestellt werden, das Rollenlager (10) für das Hartwalzen unter Einbringen von mindestens einer Rollenreihe (40) zwischen die Wälzlagerringe (20, 30) zusammengesetzt wird, wobei die Rollenreihe (40) zumindest eine Übermaßrolle (50) mit einem radialen Übermaß (51) als Walze (3) umfasst, und die Flächenpressung durch eine axial oder radial wirkende Belastung in das Rollenlager (10) eingebracht wird.

8. Verfahren nach Anspruch 7, **dadurch gekennzeichnet, dass** die mindestens eine Rollenreihe (40) mit Rollen vollbesetzt wird zur Verbesserung der Maßhaltigkeit der Wälzlagerringe (20, 30) während des Hartwalzens.

9. Verfahren nach Anspruch 7 oder 8, **dadurch gekennzeichnet, dass** das Rollenlager (10) mindestens zwei Rollenreihen (40) enthält zumindest einer der Wälzlagerringe (20, 30) für ein formschlüssiges Einschließen der Rollenreihen (40) zwischen den Wälzlagerringen (20, 30) zumindest zwei axial gegeneinander verspannbare Teilringe (21, 22) aufweist, und die Flächenpressung durch eine axial wirkende Belastung eingebracht wird, die durch axiales Verspannen der Teilringe (21, 22) gegeneinander aufgebracht wird.

10. Verfahren nach einem der Ansprüche 7 bis 9, **dadurch gekennzeichnet, dass** mindestens drei Übermaßrollen (50) über den Umfang einer Wälzlagerlaufbahn (2) verteilt als Walzen (3) in das Rollenlager (10) eingesetzt werden.

11. Verfahren nach Anspruch 10, **dadurch gekennzeichnet, dass** die Übermaßrollen (50) das radiale Übermaß (51) auf unterschiedlichen, einander überlappenden Teilbereichen (52, 53, 54) der Laufbahnbreite (B) aufweisen.

12. Rotorlager für eine Windkraftanlage umfassend mindestens eine Reihe von Kegel- oder Zylinderrollen, **dadurch gekennzeichnet, dass** die Wälzlagerlaufbahnen des Rotorlagers unter Ausführung des Verfahrens nach einem der Ansprüche 1 bis 11 hergestellt sind.

13. Walzvorrichtung zum Hartwalzen einer randschichtgehärteten Wälzlagerlaufbahn (2) eines Wälzlagerringelements (1) umfassend eine Stützvorrichtung (110) mit mindestens einer Stützwalze (111, 112) zur Lagerung des Wälzlagerringelements (1), ein mittels mindestens zweier an der Stützvorrichtung (110) angelenkter Zugstangen (121, 122) gehaltenes Joch (120), wobei das Joch (120) mit den Zugstangen (121, 122) und der Stützvorrichtung (110) einen geschlossenen Rahmen (130) bildet, durch den das Wälzlagerringelement (1) während des Hartwalzens hindurchführbar ist, und ein an dem Joch (120) hydraulisch abgestütztes, in Längsrichtung des Jochs (120) mittels einer Positioniereinrichtung (124) verschiebbar gelagertes Walzgerüst (130), in dem mindestens eine zur Bearbeitung der Wälzlagerlaufbahn (2) vorgesehene Walze (3) gelagert ist.

14. Walzvorrichtung nach Anspruch 13, **dadurch gekennzeichnet, dass** der geschlossene Rahmen (130) zur Auf- und Entnahme des Wälzlagerringelements (1) öffenbar ausgebildet ist.

15. Walzvorrichtung nach Anspruch 13 oder 14, **dadurch gekennzeichnet, dass** die Positioniereinrichtung (124) als ein Gewindetrieb ausgebildet ist.

16. Walzvorrichtung nach einem der Ansprüche 13 bis 15, **dadurch gekennzeichnet, dass** das Walzgerüst (130) an dem Joch (120) über mindestens einen mit Druck beaufschlagbaren Hydraulikzylinder (125) abgestützt ist.

17. Walzvorrichtung nach einem der Ansprüche 13 bis 16, **dadurch gekennzeichnet, dass** die Walze (3) als eine Primärwalze (131) ausgebildet ist, die über in dem Walzgerüst (130) in Lastrichtung (L) verschiebbar angeordnete Führungslager (133, 134) gelagert ist, und mindestens eine Sekundärwalze (132) mit einem im Vergleich zu der Primärwalze (131) größeren Durchmesser in dem Walzgerüst (130) gelagert ist, an der die Primärwalze (131) zur Lastableitung umfangsseitig abgestützt ist.

## Claims

1. A method for increasing the load capacity of a surface-hardened rolling bearing raceway (2) of a rolling bearing ring element (1), comprising
- providing a rolling bearing ring element (1) which has an unhardened core region (K) and, at least in certain portions, an outer layer (Ra) hardened to a surface hardening depth (Rht), a rolling bearing raceway (2) being formed in the region of the hardened outer layer (Ra),
- hard rolling the rolling bearing raceway (2) with at least one roll (3),
**characterized in that**
- the diameter (D) of the roll (3) is selected in the range of 8 to 25 times the surface hardening depth (Rht),
- a surface pressure prevailing in the rolling contact (4) between the roll (3) and the rolling bearing raceway (2) during the hard rolling is set in the range between 2000 MPa and 3300 MPa, and
- the rolling bearing raceway (2) is machined after the hard rolling.

2. The method as claimed in claim 1, **characterized in that** the surface pressure in the rolling contact (4) is selected in such a way that load stresses (LS) brought about in the unhardened core region (K) are at most 0.9 to 2 times, preferably 1.2 to 1.5 times, the yield strength (S) of the unhardened core region (K).

3. The method as claimed in claim 1 or 2, **characterized in that** the surface pressure in the rolling contact (4) is selected in such a way that the hard rolling at most gives rise to plastic strain of up to 5% in the core region (K).

4. The method as claimed in one of claims 1 to 3, **characterized in that** the rolling contact (4) has a width (b) of at most 2/3 of the width (B) of the rolling bearing raceway (2) and the rolling bearing raceway (2) is hard-rolled in multiple overlapping paths.

5. The method as claimed in one of claims 1 to 4, **characterized in that** the roll (3) has a lateral surface (5) which is convexly curved in longitudinal section at least in peripheral regions (6) of the rolling contact (4).

6. The method as claimed in one of claims 1 to 5, **characterized in that** the rolling bearing ring element (1) is manufactured with an allowance at least in the region of the rolling bearing raceway (2).

7. The method as claimed in one of claims 1 to 6, **characterized in that** the rolling bearing rings (20, 30) of a roller bearing (10) are provided as rolling bearing ring elements (1), the roller bearing (10) is assembled for hard rolling with the introduction of at least one roller row (40) between the rolling bearing rings (20, 30), the roller row (40) comprising at least one oversize roller (50) with a radial oversize (51) as the roll (3), and the surface pressure is introduced into the roller bearing (10) by an axially or radially acting load.

8. The method as claimed in claim 7, **characterized in that** the at least one roller row (40) is fully occupied with rollers to improve the dimensional accuracy of the rolling bearing rings (20, 30) during the hard rolling.

9. The method as claimed in claim 7 or 8, **characterized in that** the roller bearing (10) contains at least two roller rows (40), at least one of the rolling bearing rings (20, 30) has at least two partial rings (21, 22) which can be braced axially against one another for enclosing the roller rows (40) between the rolling bearing rings (20, 30) in a positively locking manner, and the surface pressure is introduced by an axially acting load which is applied by axial bracing of the partial rings (21, 22) against one another.

10. The method as claimed in one of claims 7 to 9, **characterized in that** at least three oversize rollers (50) are inserted as rolls (3) into the roller bearing (10) so as to be distributed over the circumference of a rolling bearing raceway (2).

11. The method as claimed in claim 10, **characterized in that** the oversize rollers (50) have the radial oversize (51) on different, overlapping partial regions (52, 53, 54) of the raceway width (B).

12. A rotor bearing for a wind turbine, comprising at least one row of tapered or cylinder rollers, **characterized in that** the rolling bearing raceways of the rotor bearing are produced by carrying out the method as claimed in one of claims 1 to 11.

13. A rolling apparatus for hard rolling a surface-hardened rolling bearing raceway (2) of a rolling bearing ring element (1), comprising a support apparatus (110) with at least one supporting roll (111, 112) for supporting the rolling bearing ring element (1), a yoke (120) which is held by means of at least two tension rods (121, 122) which are articulated on the support apparatus (110), the yoke (120) forming, together with the tension rods (121, 122) and the support apparatus (110), a closed frame (123) through which the rolling bearing ring element (1) can be guided during the hard rolling, and a roll stand (130) which is hydraulically supported on the yoke (120), which is mounted so as to be displaceable in a longitudinal direction of the yoke (120) by means of a positioning device (124) and in which at least one roll (3) provided for processing the rolling bearing raceway (2) is mounted.

14. The rolling apparatus as claimed in claim 13, **characterized in that** the closed frame (123) is configured to be openable for receiving and removing the rolling bearing ring element (1).

15. The rolling apparatus as claimed in claim 13 or 14, **characterized in that** the positioning device (124) is in the form of a screw drive.

16. The rolling apparatus as claimed in one of claims 13 to 15, **characterized in that** the roll stand (130) is supported on the yoke (120) by way of at least one pressurizable hydraulic cylinder (125).

17. The rolling apparatus as claimed in one of claims 13 to 16, **characterized in that** the roll (3) is in the form of a primary roll (131) which is mounted by way of guide bearings (133, 134) which are arranged so as to be displaceable in the load direction (L) in the roll stand (130), and at least one secondary roll (132) with a larger diameter than the primary roll (131) is mounted in the roll stand (130) and circumferentially supports the primary roll (131) for load dissipation.

## Revendications

1. Procédé pour augmenter la capacité de charge d'un chemin de roulement (2) durci en surface d'un élément de bague de roulement (1), comprenant
- Fournir un élément de bague de roulement (1) qui a une zone centrale non durcie (K) et, au moins dans certaines parties, une couche extérieure (Ra) durcie à une profondeur de durcissement de surface (Rht), un chemin de roulement (2) étant formé dans la zone de la couche extérieure durcie (Ra),
- laminer dur le chemin de roulement (2) avec au moins un rouleau (3),
**caractérisé en ce que**
- le diamètre (D) du rouleau (3) est choisi dans une fourchette de 8 à 25 fois la profondeur de durcissement de surface (Rht),
- une pression de surface prévalant dans le contact de laminage (4) entre le rouleau (3) et le chemin de roulement (2) pendant le laminage dur est fixée dans une fourchette comprise entre 2000 MPa et 3300 MPa, et
- le chemin de roulement (2) est usiné après le laminage dur.

2. Procédé selon la revendication 1, **caractérisée en ce que** la pression de surface dans le contact de laminage (4) est choisie de manière à ce que les contraintes de charge (LS) provoquées dans la zone centrale non durcie (K) soient au maximum de 0,9 à 2 fois, de préférence de 1,2 à 1,5 fois, la limite d'élasticité (S) de la zone centrale non durcie (K).

3. Procédé selon la revendication 1 ou 2, **caractérisé en ce que** la pression superficielle dans le contact de laminage (4) est choisie de manière à ce que le laminage dur donne lieu au maximum à une déformation plastique de 5 % dans la zone centrale (K).

4. Procédé selon l'une des revendications 1 à 3, **caractérisé en ce que** le contact de laminage (4) a une largeur (b) d'au plus 2/3 de la largeur (B) du chemin de roulement (2) et que le chemin de roulement (2) est laminé en plusieurs trajectoires qui se chevauchent.

5. Procédé selon l'une des revendications 1 à 4, **caractérisé en ce que** le rouleau (3) présente une surface latérale (5) convexe en section longitudinale au moins dans les zones périphériques (6) du contact de laminage (4).

6. Procédé selon l'une des revendications 1 à 5, **caractérisé en ce que** l'élément de bague de roulement (1) est fabriqué avec une surépaisseur au moins dans la zone du chemin de roulement (2).

7. Procédé selon l'une des revendications 1 à 6, **caractérisé en ce que** les bagues de roulement (20, 30) d'un roulement à rouleaux (10) sont fournies en tant qu'éléments de bagues de roulement (1), le roulement à rouleaux (10) est assemblé pour un laminage dur avec l'introduction d'au moins une rangée de rouleaux (40) entre les bagues de roulement (20, 30), la rangée de rouleaux (40) comprenant au moins un rouleau surdi-mensionné (50) avec une surdimension radiale (51) en tant que rouleau (3), et la pression de surface est introduite dans le roulement à rouleaux (10) par une charge s'exerçant axialement ou radialement.

8. Procédé selon la revendication 7, **caractérisé en ce que l'au** moins une rangée de rouleaux (40) est entièrement occupée par des rouleaux afin d'améliorer la précision dimensionnelle des bagues de roulement (20, 30) pendant le laminage dur.

9. Procédé selon la revendication 7 ou 8, **caractérisé en ce que** le roulement à rouleaux (10) contient au moins deux rangées de rouleaux (40), au moins une des bagues de roulement (20, 30) a au moins deux bagues partielles (21, 22) qui peuvent être serrées axialement l'une contre l'autre pour enfermer les rangées de rouleaux (40) entre les bagues de roulement (20, 30) d'une manière positivement verrouillée, et la pression de surface est introduite par une charge agissant axialement qui est appliquée par le serrage axial des bagues partielles (21, 22) l'une contre l'autre.

10. Procédé selon l'une des revendications 7 à 9, **caractérisé en ce qu'au** moins trois rouleaux surdimensionnés (50) sont insérés sous forme de rouleaux (3) dans le roulement à rouleaux (10) de manière à être répartis sur la circonférence d'un chemin de roulement (2).

11. Procédé selon la revendication 10, **caractérisée en ce que les** rouleaux surdimensionnés (50) ont la surdimension radiale (51) sur différentes régions partielles (52, 53, 54) de la largeur du chemin de roulement (B) qui se chevauchent.

12. Palier de rotor pour éolienne, comprenant au moins une rangée de rouleaux coniques ou cylindriques, **caractérisé en ce que** les chemins de roulement du palier de rotor sont produits par la mise en oeuvre du procédé tel que revendiqué dans l'une des revendications 1 à 11.

13. Dispositif de laminage pour le laminage dur d'un chemin de roulement (2) durci en surface d'un élément de bague de roulement (1), comprenant un dispositif de support (110) avec au moins un rouleau de support (111, 112) pour supporter l'élément de bague de roulement (1), un étrier (120) qui est maintenu au moyen d'au moins deux tiges de tension (121, 122) qui sont articulées sur le dispositif de support (110), l'étrier (120) formant, avec les tiges de tension (121, 122) et le dispositif de support (110), un cadre fermé (123) à travers lequel l'élément de bague de roulement (1) peut être guidé pendant le laminage dur, et une cage de laminoir (130) qui est supportée hydrauliquement sur l'étrier (120), qui est montée de manière à pouvoir être déplacée dans une direction longitudinale de l'étrier (120) au moyen d'un dispositif de positionnement (124) et dans laquelle au moins un rouleau (3) prévu pour traiter le chemin de roulement (2) est monté.

14. Dispositif de laminage selon la revendication 13, **caractérisé en ce que** le cadre fermé (123) est configuré pour s'ouvrir afin de recevoir et de retirer l'élément de bague de roulement (1).

15. Dispositif de laminage selon la revendication 13 ou 14, **caractérisé en ce que** le dispositif de positionnement (124) se présente sous la forme d'une vis sans fin.

16. Dispositif de laminage selon l'une des revendications 13 à 15, **caractérisé en ce que** la cage de laminoir (130) est supportée sur l'étrier (120) par au moins un cylindre hydraulique pressurisable (125).

17. Dispositif de laminage selon l'une des revendications 13 à 16, **caractérisé en ce que** le rouleau (3) se présente sous la forme d'un rouleau primaire (131) qui est monté au moyen de paliers de guidage (133, 134) disposés de manière à pouvoir être déplacés dans la direction de la charge (L) dans la cage de laminoir (130), et au moins un rouleau secondaire (132) d'un diamètre plus grand que le rouleau primaire (131) est monté dans la cage de laminoir (130) et supporte circonférentiellement le rouleau primaire (131) pour la dissipation de la charge.
